# EUROPÄISCHE PATENTSCHRIFT

(11) **EP 4 341 649 B1**
(45) Veröffentlichungstag und Bekanntmachung des Hinweises auf die Patenterteilung: **28.08.2024**
(21) Anmeldenummer: 22746997.0
(22) Anmeldetag: 07.07.2022
(51) Int. Cl.: G01F 1/60, G01F 1/58

(54) **VERFAHREN ZUR STÖRUNGSBEAUFSCHLAGTEN DURCHFLUSSMESSUNG, MAGNETISCH-INDUKTIVER DURCHFLUSSMESSER UND COMPUTERPROGRAMMPRODUKT**
METHOD FOR FLOW MEASUREMENT THAT IS SUBJECT TO INTERFERENCE, MAGNETO-INDUCTIVE FLOWMETER AND COMPUTER PROGRAM PRODUCT
PROCÉDÉ DE MESURE DE DÉBIT SOUMIS À UNE INTERFÉRENCE, DÉBITMÈTRE MAGNÉTO-INDUCTIF ET PRODUIT-PROGRAMME INFORMATIQUE

(30) Priorität: 06.08.2021 DE 102021208598
(43) Veröffentlichungstag der Anmeldung: 27.03.2024
(73) Patentinhaber: Siemens Aktiengesellschaft, 80333 München (DE)
(72) Erfinder: WILKENING, Wilko, 91052 Erlangen (DE); NAIT MEZIANE, Mohamed, 67800 Bischheim (FR)
(74) Vertreter: Siemens Patent Attorneys
(86) Internationale Anmeldenummer: PCT/EP2022/068953
(87) Internationale Veröffentlichungsnummer: WO 2023/011846

(56) Entgegenhaltungen:
- WO-A1-2021/137089
- DE-A1- 102005 018 179
- DE-A1- 102013 114 427
- DE-A1- 102019 103 501
- DE-T2- 69 420 783
- US-A1- 2011 239 778
- US-A1- 2020 080 877
- US-B1- 6 615 149

## Beschreibung

Die Erfindung betrifft Verfahren zum Messen eines Durchflusses in einem Rohr mittels eines induktiv-magnetischen Durchflussmessers. Ebenso betrifft die Erfindung ein Computerprogrammprodukt, das zum Durchführen zumindest eines derartigen Verfahrens geeignet ist. Die Erfindung betrifft auch eine Steuereinheit, die über ein solches Computerprogrammprodukt verfügt und einen entsprechend ausgerüsteten magnetisch-induktiven Durchflussmesser. Ferner betrifft die Erfindung ein Computerprogrammprodukt zum Simulieren eines Betriebsverhaltens eines derartigen magnetisch-induktiven Durchflussmessers.

Die Druckschrift DE 102 56 103 A1 offenbart ein Verfahren zur Bestimmung der Unsicherheit eines mit einer Messfrequenz verarbeiteten Messverfahrens, das in magnetisch-induktiven Durchflussmesser einsetzbar ist. Darin werden alternierend Rechteckpulse angeregt und von diesen jeweils Zeitintervalle ausgewertet. Zur Auswertung wird zunächst ein Einschwingen abgeartet.

DE 10 2019 103 501 A1 zeigt ein Verfahren zum Betreiben eines magnetisch-induktiven Durchflussmessgeräts, in dem Gasblasen in einem Messrohr erkannt werden. Es werden Rechteckimpulse erzeugt und ausgewertet und eine Strömungsgeschwindigkeit im Messrohr zu ermitteln. In Pausen zwischen Rechteckimpulsen wird ein Messsignal mehrmals abgetastet und aus den pro Pausenzeit erfassten Messsignalen ein Mittelwert gebildet. Es werden Differenzen zwischen mehreren Mittelwerten mehrerer Perioden gebildet und diese mit einem Schwellenwert verglichen. Bei einem gefüllten Messrohr betragen die Differenzen näherungsweise Null.

Die Offenlegungsschrift DE 10 2004 031 638 A1 offenbart ein Verfahren zum Betrieb einer magnetisch induktiven Durchflussmesseinrichtung, bei dem Störsignale minimiert werden. Darin wird aus einem Empfangssignalspektrum, das Störsignale einschließt, und einer Referenzspannung ein Vektorprodukt gebildet. Ausgehend hiervon wird mittels einer inversen Fouriertransformation ein Nutzsignalanteil ermittelt, anhand dessen wiederum ein Durchfluss berechnet wird.

Aus der Patentschrift US 6,615,149 B1 ist ein Verfahren zur Spektraldiagnostik an einem magnetischen Durchflussmesser bekannt, bei dem eine störungsbeaufschlagte Durchflussmessung erfolgt. Mittels einer Fourier-Analyse wird eine Störung im Bereich einer Netzfrequenz von 50 Hz oder 60 Hz ermittelt und gegebenenfalls eine Warnung an einen Benutzer ausgegeben.

Die Druckschrift DE 694 20 783 T2 offenbart einen elektromagnetischen Durchflussmesser mit einem Messrohr und einem Mittel zum Anlegen eines Wechsel-Magnetfelds. Der Durchflussmesser weist Abtastmittel zum Erfassen einer elektromotorischen Kraft, die durch die Magnetfelder verursacht werden. Die Abtastmittel sind dazu ausgebildet, zu mehreren Zeitpunkten in der gleichen Richtung in einer Periode zu erfassen.

Aus der Offenlegungsschrift DE 10 2005 018 179 A1 ist ein Verfahren zum Betrieb eines Messgeräts bekannt, bei der Messbetrieb mit einer Messfrequenz getaktet wird. Im Messbetrieb werden Messdaten einer Frequenzanalyse unterworfen und die Messfrequenz automatisch in Abhängigkeit von dem damit erfassten Frequenzspektrum gesteuert. WO2021137089 A1 offenbart einen magnetisch-induktiven Durchflussmesser, bei dem die Spulen nicht symmetrisch zu der Ebene angeordnet sind, in der sich die Spannungssensoren befinden. Außerdem wird ein digitaler Zwilling auf der Grundlage eines physikalischen Modells verwendet, um die Winkel zu optimieren, die für die Installation der Spule und der Spannungssensoren gewählt wurden, und um den Füllungsgrad im Rohr zu berechnen.

Durchflussmesser werden in einer Vielzahl an Anwendungen, beispielsweise Chemieanlagen, eingesetzt, um Durchsätze von Flüssigkeiten oder Gasen zu bestimmen. Die Durchflussmesser unterliegen dabei häufig Störeinflüssen, durch die eine Messgenauigkeit der Durchflussmesser herabgesetzt werden kann. Gleichzeitig werden kosteneffiziente Durchflussmesser angestrebt. Es besteht daher Bedarf an Durchflussmessern, die robust gegen Störeinflüsse sind, präzise Messungen erlauben und gleichzeitig wirtschaftlich herzustellen sind. Der Erfindung liegt die Aufgabe zugrunde, eine Möglichkeit bereitzustellen, die in zumindest einem der skizzierten Aspekte eine Verbesserung bietet.

Die Aufgabenstellung wird durch ein erfindungsgemäßes Verfahren gelöst, mit dem ein Durchfluss eines Fluids in einem Rohr gemessen wird. Dazu wird ein magnetisch-induktiver Durchflussmesser eingesetzt, der auf dem Rohr befestigt ist. Der magnetisch-induktive Durchflussmesser weist eine Magnetspule auf, durch die im Querschnitt des Rohrs ein Magnetfeld induzierbar ist, das mit fließenden geladenen Teilchen im Rohr in Wechselwirkung tritt. Hierdurch ist im Querschnitt des Rohrs senkrecht im Magnetfeld eine elektrische Spannung hervorrufbar, die über geeignet angebrachte Spannungssensoren erfassbar ist. In einem ersten Schritt des Verfahrens erfolgt ein Anregen der Magnetspule mit einem Rechtecksignal, das eine Pulsfrequenz aufweist. Das Rechtecksignal, auch boxcar signal genannt, kann dabei aus einer Überlagerung mehrerer Sinussignale erzeugt werden. Durch das Rechtecksignal wird im Querschnitt des Rohrs eine elektrische Spannung hervorgerufen, die als Messsignal erfasst wird. Das Messsignal weist im Wesentlich ebenso eine Rechteckform auf. Eine Amplitude des Messsignals korrespondiert mit dem zu messenden Durchfluss im Rohr. Das Verfahren umfasst einen zweiten Schritt, in dem ein Erfassen eines ersten Messwertabschnitts des Messsignals erfolgt. Der Messwertabschnitt ist ein Abschnitt des Messsignals, in dem dieses zumindest zeitweise die Amplitude, also den Amplitudenwert, annimmt. Die Amplitude wiederum hängt von einer Fließgeschwindigkeit im Rohr, also dem Durchfluss, ab. Der erste Messwertabschnitt umfasst einen ersten und zweiten Teilabschnitt, die separat betrachtbar und auswertbar sind. Insbesondere ist das Messsignal für den ersten und zweiten Teilabschnitt separat weiter verarbeitbar.

Ferner umfasst das Verfahren einen dritten Schritt, in dem jeweils für den ersten und zweiten Teilabschnitt des ersten Messwertabschnitts ein Durchschnittswert des Messsignals gebildet wird. Insbesondere kann über den ersten bzw. zweiten Teilabschnitt hinweg als Durchschnittswert ein durchschnittlicher Amplitudenwert des Messsignals gebildet werden. Bei einem störungsfreien Messsignal nimmt dieses über den ersten und zweiten Teilabschnitt hinweg im ersten Messwertabschnitt einen konstanten Amplitudenwert an. Eine Differenz der Durchschnittswerte im ersten und zweiten Teilabschnitt wird bei gleicher Länge folglich im Wesentlichen zu Null. Bei Vorliegen einer Störung entsprechender Frequenz und Phase hingegen unterscheiden sich die Durchschnittswerte im ersten und zweiten Teilabschnitt, so dass eine Differenz zwischen diesen von Null abweicht. Wenn die Durchschnittswerte im ersten und zweiten Teilabschnitt um mindestens einen einstellbaren Stör-Schwellenwert voneinander abweichen, wird im erfindungsgemäßen Verfahren das Vorliegen einer Störung erkannt. Der Stör-Schwellenwert ist beispielsweise durch eine Eingabe eines Benutzers oder durch einen Algorithmus vorgebbar, so dass die Empfindlichkeit einer solchen Störungserkennung an die jeweils vorliegende Anwendung zweckmäßig anpassbar ist. Wenn ein Vorliegen einer Störung erkannt ist, kann die Auswertung des Messsignals angepasst werden, um so den Durchfluss im Rohr präzise zu messen. Das Bilden eines Durchschnittswerts für Teile eines Messsignals, also Messwertabschnitte und deren Teilbereiche, ist mit reduziertem Rechenaufwand möglich. In einem zusätzlichen Schritt erfolgt eine Verschiebung der Teilabschnitte, so dass z. B. die ersten und die letzten 25% des Messwertabschnitts zum ersten Teilabschnitt gehören und die mittleren 50% des Messwertabschnitts zum zweiten Teilabschnitt. Danach wird erneut die Differenz der Mittelwerte der Teilabschnitte gebildet.

Die beschriebenen Schritte verwirklichen eine Quadraturdemodulation mit einem rechteckförmigen Signal und anschließender Tiefpassfilterung, wobei die Differenzen als Real- und Imaginärteile des demodulierten Signals interpretierbar sind. Der Betrag des komplexen Wertes entspricht dann dem Amplitudenwert des Störsignals. Die Auswertung kann über mehrere Perioden des Anregungssignals fortgesetzt werden. Durch die Wahl der Teilabschnitte ist eine Frequenzselektivität der Störungsdetektion gegeben.

Das erfindungsgemäße Verfahren ist aufgrund der Mittelwert- und Differenzbildung auch auf einfacher Hardware schnell durchführbar. Das Vorliegen einer Störung im Messsignal ist ferner mit einer überraschend hohen Zuverlässigkeit in einfacher Weise erkennbar. Mittels geeigneter Kompensationsmaßnahmen ist ein korrigierter Amplitudenwert ermittelbar, der ein präzises Maß für den vorliegenden Durchfluss im Rohr darstellt.

Erfindungsgemäß weist das Rechtecksignal, mit dem die Magnetspule angeregt wird, eine Inaktivphase auf, die unabhängig vom ersten und/oder zweiten Messwertabschnitt ist. Die Inaktivphase liegt zwischen zwei Messwertabschnitten und bestimmt im Wesentlichen den zeitlichen Abstand, mit dem Amplitudenwerte des Messsignals erzeugbar sind. Während der Inaktivphasen erfolgt ein Umpolen des erzeugten Magnetfeldes. Wenn im beanspruchten Verfahren eine Störung erkannt wird, die unperiodisch ist, ist die Inaktivphase derart einstellbar, dass eine angestrebte Abtastrate erzielt wird. Der magnetisch-induktive Durchflussmesser ist so beispielsweise an eine weitere Auswertungseinheit anpassbar, die Messergebnisse des magnetisch-induktiven Durchflussmessers weiterverarbeitet. Alternativ oder ergänzend ist die Inaktivphase auch verkürzbar, um so eine gesteigerte Abtastrate zu erzielen. Insgesamt wird so das technische Potential des magnetisch-induktiven Durchflussmessers weiter ausgeschöpft. Insbesondere ist durch ein Reduzieren der Inaktivphase auf die Dauer, die zum Umpolen des Magnetfeldes erforderlich ist, eine Grenze für das technische Potential des magnetisch-induktiven Durchflussmessers gesetzt, das jedoch durch die beanspruchte Lösung vollständig nutzbar ist.

Weiter erfindungsgemäß umfasst das Verfahren einen weiteren Schritt, in dem eine Pulsdauer des Rechtecksignals, also im Wesentlichen die Gesamtdauer der jeweiligen Messwertabschnitte, und/oder die Dauer der Inaktivphase angepasst, also modifiziert, werden. Das Anpassen erfolgt zu einem Angleichen einer Störwirkung in aufeinanderfolgenden Messwertabschnitten. Durch ein solches Anpassen der Pulsdauer und/oder Dauer der Inaktivphase können sich die Effekte der Störung auf das Messsignal beispielsweise bei einem Ermitteln eines doppelten Amplitudenwerts, wie oben beispielhaft dargelegt, gegenseitig ausgleichen. Dadurch ist insbesondere die Wirkung einer Störung, die periodisch ist, also die beispielsweise mit der Pulsfrequenz gekoppelt ist, reduzierbar. Der Rechenaufwand zur Kompensation der Störung bzw. ihrer Störwirkung ist dadurch weiter reduziert, was dem Verfahren eine erhöhte Robustheit bei einem gleichzeitig breiten Einsatzspektrum verleiht. Der genannte Ausgleich kann auch über mehr als zwei Messwertabschnitte erfolgen. Dies kann notwendig sein, wenn das Störsignal eine niedrige Frequenz ausweist. Ein nach zwei Messwertabschnitten gebildeter Amplitudenwert wäre dann noch fehlerbehaftet. Die Mittelung mehrerer Amplitudenwerte, beispielsweise von zwei oder vier Amplitudenwerten, führt dann zum Ausgleich der Störung.

In einer Ausführungsform des beanspruchten Verfahrens folgen der erste und zweite Teilabschnitt aufeinander, liegen also zeitlich hintereinander. Dabei kann sich der zweite Teilabschnitt unmittelbar an den ersten Teilabschnitt anschließen oder zwischen diesen ein zeitlicher Abstand liegen. Alternativ können der erste und zweite Teilabschnitt auch teilweise zeitlich überlappen. Beispielsweise kann der erste Teilabschnitt gemeinsam mit dem ersten Messwertabschnitt beginnen und nach 50% dessen Gesamtdauer enden. Ergänzend dazu kann der zweite Teilabschnitt beispielsweise erst nach 25% der Gesamtdauer des Messwertabschnitts beginnen und nach Ablauf von 75% der Gesamtdauer des Messwertabschnitts enden. Weiter alternativ oder ergänzend kann der erste Messwertabschnitt auch weitere Teilabschnitte, also einen dritten, vierten, usw. Teilabschnitt, aufweisen. Durch das Bilden von Durchschnittswerten von bereits zwei Teilabschnitten ist in einfacher Weise das Vorliegen einer Störung im Messwertabschnitt erkennbar. Die Mittelwerte kürzerer Teilabschnitte lassen sich weiterverwenden, um die Mittelwerte längerer oder anders positionierter Teilabschnitte zu bilden. Hiermit können Störungen unterschiedlicher Frequenz und Phasenlage mit geringem Rechenaufwand detektiert werden.

Des Weiteren kann für den ersten Messwertabschnitt und einen zweiten Messwertabschnitt ein Durchschnittswert des Messsignals gebildet werden. Der Durchschnittswert wird hierbei über den gesamten ersten bzw. zweiten Messwertabschnitt gebildet. Der erste und zweite Messwertabschnitt können aufeinander folgende Messwertabschnitte im Messsignal sein. Dementsprechend können der erste und zweite Messwertabschnitt entgegengerichtete Amplituden aufweisen. Beispielsweise ist so durch geeignete Differenzbildung zwischen den Durchschnittswerten im ersten und zweiten Messwertabschnitt betragsmäßig im Wesentlichen die doppelte Amplitude des Messsignals, also der doppelte Amplitudenwert, ermittelbar. Dies liefert bei reduziertem Rechenaufwand einen präzisen Wert für die Amplitude des Messsignals.

Erfolgt alternativ statt der Differenzbildung eine Summierung der Durchschnittswerte, so ist bei gleicher zeitlicher Länge der Messwertabschnitte ein sehr kleiner Wert zu erwarten. Bei unterschiedlichen zeitlichen Längen ist eine entsprechende Gewichtung vorzunehmen. Ist ein sehr kleiner Wert bei der Summierung nicht gegeben, so ist dies ein Hinweis auf eine Störung z. B. eine Abweichung der magnetischen Flüsse vom Nominalwert oder eine elektrochemische Reaktion an den Elektroden. Dies kann einen Defekt oder eine Degradation einer Komponente des magnetisch-induktiven Durchflussmessers anzeigen.

In einer weiteren Ausführungsform des beanspruchten Verfahrens werden der erste und zweite Schritt korrespondierend auch für den zweiten Messwertabschnitt durchgeführt. Dadurch ist das Messsignal separat für den ersten und zweiten Messwertabschnitt erfasst und weiter nutzbar. Eine charakteristische Größe eines Messwertabschnitts, z. B. der Mittelwert des Messsignals, wird als Zeitreihe auf ein Trägersignal moduliert, beispielsweise mittels einer Quadraturamplitudenmodulation. Das Trägersignal weist eine Trägerfrequenz auf, die im Wesentlichen der Pulsfrequenz entspricht, mit der die Magnetspule angeregt wird. Hieraus ist eine Frequenzverschiebung gegenüber einer Vergleichsfrequenz ermittelbar. Insbesondere durch ein Kombinieren mit der Vergleichsfrequenz ergibt sich in einer Frequenzanalyse eine Spitze, also ein Betragsmaximum, auch peak genannt, bei circa 0 Hz, wenn das Messsignal störungsfrei ist. Das Kombinieren kann unter anderem als ein sogenanntes Aliasing ausgebildet sein. Bei Vorliegen einer Störung, die sich auf das Messsignal auswirkt, ergibt sich bei der skizzierten Frequenzanalyse eine Spitze bei einer Frequenz, die einer Frequenzverschiebung zwischen der Pulsfrequenz und der Vergleichsfrequenz entspricht. Hierdurch ist feststellbar, ob die Pulsfrequenz einem Sollwert entspricht. Beispielsweise ist bei einer Pulsfrequenz, die an eine Netzfrequenz gekoppelt ist, so feststellbar, ob die vorliegende Netzfrequenz, sofern eine daran gebundene Störung vorliegt, einer Netz-Sollfrequenz entspricht, insbesondere 50 Hz oder 60 Hz. Die vorliegende Störung beim Messen des Durchflusses im Rohr ist dadurch weiter näher charakterisierbar und so gezielt kompensierbar. Ferner sind die beschriebenen Schritte auch für einen dritten, vierten, usw. Messwertabschnitt durchführbar.

In einer weiteren Ausführungsform des beanspruchten Verfahrens kann in einem zusätzlichen Schritt ein Anregen der Magnetspule für eine einstellbare Dauer unterbrochen werden. Dies kann durch ein Auslassen zumindest eines Pulses bestehen, oder in einem Zeitraum zwischen zwei Anregungen der Magnetspule erfolgen. Währenddessen erfolgt ein Erfassen eines verbleibenden Restmagnetfelds im Rohr, das weiter ausgewertet wird. In einem bestimmungsgemäßen Zustand ist bei ausbleibender Anregung der Magnetspulen kein technisch nutzbares oder auswertbares Messsignal zu erwarten. In einem gestörten Zustand entsprechen die empfangenen Messsignale einer Störung, die beispielsweise einem Magnetfeld eines benachbarten elektrischen Geräts hervorgerufen wird. Derartige erfasste Störungen werden in einem weiteren Betrieb der magnetisch-induktiven Messvorrichtung beim Auswerten der Messsignale ignoriert und/oder unterdrückt. Ebenso ist durch die Auswertung der Messsignale des Restmagnetfelds eine Störungsursache diagnostizierbar, beispielsweise eine elektromagnetische Einkopplung auf Leitungen der Magnetspule. Insgesamt sind eine weitere Steigerung der Messgenauigkeit und differenzierte Eigendiagnose des magnetisch-induktiven Durchflussmessers erzielbar.

Die zugrundeliegende Aufgabenstellung wird ebenso durch das folgende erfindungsgemäße Verfahren gelöst. Dieses beruht auf denselben mathematischen und signaltheoretischen Eigenschaften wie das oben dargelegte Verfahren. Das oben beschriebene Verfahren und das im Folgenden beschriebene Verfahren stellen deshalb unterschiedliche Facetten desselben technologischen Konzepts dar und knüpfen an dieselben erfindungswesentlichen Erwägungen und Erkenntnisse an.

Das erfindungsgemäße Verfahren dient zu einem Messen eines Durchflusses eines Fluids in einem Rohr, an dem ein magnetisch-induktiver Durchflussmesser befestigt ist. Der magnetisch-induktive Durchflussmesser weist eine Magnetspule auf, durch die im Querschnitt des Rohrs ein Magnetfeld induzierbar ist, das mit fließenden geladenen Teilchen im Rohr in Wechselwirkung tritt. Hierdurch ist im Querschnitt des Rohrs senkrecht im Magnetfeld eine elektrische Spannung hervorrufbar, die über geeignet angebrachte Spannungssensoren erfassbar ist. In einem ersten Schritt des Verfahrens erfolgt ein Anregen der Magnetspule mit einem Rechtecksignal, das eine Pulsfrequenz aufweist. Das Rechtecksignal, auch boxcar signal genannt, kann dabei aus einer Überlagerung mehrerer Sinussignale erzeugt werden. Durch das Rechtecksignal wird im Querschnitt des Rohrs eine elektrische Spannung hervorgerufen, die als Messsignal erfasst wird. Das Messsignal weist im Wesentlich ebenso eine Rechteckform auf. Eine Amplitude des Messsignals korrespondiert mit dem zu messenden Durchfluss im Rohr.

Das Verfahren umfasst auch einen zweiten Schritt, in dem eine Frequenzanalyse des Messsignals durchgeführt wird. Die Frequenzanalyse kann dabei zur Laufzeit des Verfahrens parallel mitlaufend durchgeführt werden. Die Frequenzanalyse kann in Form einer Zeit-Frequenz-Analyse das Messsignal über Zeitabschnitte hinweg analysieren, die sich überlappen können. Durch die Frequenzanalyse im zweiten Schritt erfolgt ein Ermitteln von Frequenzanteilen des Messsignals. Ausgehend hiervon werden die Frequenzanteile näher betrachtet. In einem dritten Schritt wird ein Frequenzanteil als Rechteck-Frequenzanteil, also als durch das Rechtecksignal an der Magnetspule hervorgerufen, erkannt, wenn der entsprechende Frequenzanteil einem ungeradzahligen Vielfachen der Pulsfrequenz entspricht. Der Erfindung liegt unter anderem die Erkenntnis zugrunde, dass ein Rechtecksignal als eine Kombination von Schwingungen gebildet wird, deren Frequenzen beispielsweise einem Einfachen, einem Dreifachen, einem Fünffachen, einem Siebenfachen, usw. der Pulsfrequenz entsprechen. Ein störungsfreies Messsignal zeigt in der Frequenzanalyse daher ausschließlich die oben skizzierten Frequenzanteile mit vorhersagbaren Amplituden und Phasen. Ferner sind durch eine Kombination von zwei überlagerten Rechtecksignalen zwischen deren Messwertabschnitten Inaktivphasen definierbar. Wenn ein Frequenzanteil des Messsignals kein Rechteck-Frequenzanteil ist, erfolgt im erfindungsgemäßen Verfahren ein vierter Schritt. Darin wird der entsprechende Frequenzanteil des Messsignals als Störfrequenz erkannt. Mittels des erfindungsgemäßen Verfahrens sind Störfrequenzen nicht nur qualitativ, sondern gleichzeitig auch quantitativ erkennbar. Dies erlaubt es, durch geeignete Filterung oder Korrekturmaßnahmen die Störwirkung, die von der Störfrequenz ausgeht, auszugleichen. Frequenzanalysen sind schnell durchführbar und erlauben eine präzise Auswertung des Messsignals. Bei einer solchen Frequenzanalyse des Messsignals sind Amplitudenwerte und Phasenwerte dessen algebraisch ermittelbar, was eine exakte Auswertung des Messsignals erlaubt. Dementsprechend ist das erfindungsgemäße Verfahren dazu geeignet, den Amplitudenwert im Messwertabschnitt präzise zu ermitteln, was eine exakte Berechnung des Durchflusses im Rohr trotz einer vorhandenen Störung erlaubt. Zusätzlich ist das erfindungsgemäße Verfahren dazu geeignet, im Zuge der Frequenzanalyse des Messsignals einen Defekt oder eine Degradation von Komponenten des magnetisch-induktiven Durchflussmessers zu erkennen, da die Degradation dazu führt, dass die Frequenzanalyse im Ergebnis vom zu erwartenden Ergebnis abweicht. Das erfindungsgemäße Verfahren ist ferner dazu geeignet, unterschiedliche Störungen zu identifizieren und weist folglich eine erhöhte Robustheit auf. Das technische Potential des eingesetzten magnetisch-induktiven Durchflussmessers wird so weiter ausgeschöpft. Unter einem Rechtecksignal ist auch jegliches Signal zu verstehen, das bei einer Frequenzanalyse ein vorhersagbares Ergebnis aufweist, in dem die Wirkungen von Störungen und Degradationen klar identifizierbar hervorvortreten.

Erfindungsgemäß umfasst das Verfahren einen weiteren Schritt, in dem die Dauer der Messwertabschnitte auf ein auf ein ganzzahliges Vielfaches der Periodendauer eines Störsignal eingestellt wird. Dazu werden erfindungsgemäß die Dauern von Inaktivphasen angepasst. Zusätzlich kann die Pulsfrequenz angepasst werden.

In einer Ausführungsform des beanspruchten Verfahrens ist die Frequenzanalyse als Fourier-Analyse oder als Wavelet-Analyse ausgebildet. Diese liefern präzise Auskunft über die Eigenschaften des Messsignals als Ganzes und über wählbare Abschnitte des Messsignals, insbesondere die Messwertabschnitte, die eine Störwirkung unterworfen sein können. Ferner werden Fourier-Analysen und/oder Wavelet-Analysen in einer Vielzahl an Signalverarbeitungschips oder Controllern als effizient implementierte Funktionen bereitgestellt. Auch dadurch wird das technische Potential von magnetisch-induktiven Durchflussmessern stärker ausgenutzt. Zusätzlich kann das beanspruchte Verfahren dadurch auch auf bestehenden magnetisch-induktiven Durchflussmessern im Zuge eines Software- oder Firmware-Updates nachträglich implementiert werden. Dementsprechend ist mit dem beanspruchten Verfahren die technisch sinnvolle Nutzungsdauer von bestehenden magnetisch-induktiven Durchflussmessern kosteneffizient verlängerbar. Weiter alternativ kann statt einer Frequenzanalyse auch eine sogenannte Kleinste-Quadrate-Schätzung durchgeführt werden, die bei wenigen Messsignalen schnell durchführbar ist.

Ferner kann im beanspruchten Verfahren in einem fünften Schritt eine Amplitude, also ein Amplitudenwert, des Messsignals zumindest in einem Messwertabschnitt anhand der Frequenzanalyse ermittelt werden. Beispielsweise entspricht die Amplitude bei einem fourier-analysierten Messsignal der Summe der harmonischen Schwingungen mit alternierendem Vorzeichen. Eine solche Summe ist mit reduziertem Rechenaufwand schnell ermittelbar. Hierdurch werden Zwischenergebnisse bei der Frequenzanalyse weiterverwendet, so dass das beanspruchte Verfahren schnell durchführbar ist. Insbesondere sind aufgrund der algebraischen Berechenbarkeit des Amplitudenwerts zusätzliche Rechenschritte, beispielsweise Durchschnittswertbildungen, entbehrlich.

In einer weiteren Ausführungsform des beanspruchten Verfahrens umfasst der weitere Schritt, in dem die Dauer der Messwertabschnitte auf ein auf ein ganzzahliges Vielfaches der Periodendauer eines Störsignal eingestellt wird, dass die Pulsfrequenz angepasst wird.

In Ausführungsformen, in denen Mittelwerte über Messwertabschnitte gebildet werden, werden so periodische Störungen mit entsprechender Periodendauer unterdrückt. Durch entsprechendes Anpassen sind gleichzeitig zwei Störungen unterschiedlicher und nicht harmonisch verwandter Frequenz unterdrückbar.

Die eingangs dargelegte Aufgabenstellung wird genauso durch ein erfindungsgemäßes Computerprogrammprodukt gelöst, das zu einem Ansteuern einer Magnetspule und zum Verarbeiten von Messsignalen eines Spannungssensors ausgebildet ist. Das Computerprogrammprodukt verfügt hierzu über geeignete Schnittstellen, die ein entsprechendes Eingeben und Ausgeben von Daten bzw. Befehlen erlaubt. Die Magnetspule und der Spannungssensor gehören dabei zumindest funktional zu einem magnetisch-induktiven Durchflussmesser. Das Computerprogrammprodukt ist ferner dazu ausgebildet, im Querschnitt eines Rohrs, auf dem der Durchflussmesser befestigt ist, einen Durchfluss eines Fluids zu ermitteln, also zu messen. Dazu ist das Computerprogrammprodukt erfindungsgemäß dazu ausgebildet, zumindest eine Ausführungsform der oben skizzierten Verfahren durchzuführen. Das Computerprogrammprodukt ist dabei auf einer Recheneinheit, die mit einer Speichereinheit zusammenwirkt, ausführbar. Des Weiteren kann das Computerprogrammprodukt monolithisch ausgebildet sein, also sämtliche seiner Funktionen auf einer Hardwareplattform ausführen. Alternativ kann das Computerprogrammprodukt auch als System von mindestens zwei Teilprogrammen ausgebildet sein, die auf unterschiedlichen Hardwareplattformen ausführbar sind und durch eine kommunikative Datenverbindung zusammenwirken. Jedes Teilprogramm umfasst dabei zumindest eine Funktion des Computerprogrammprodukts, beispielsweise ein Vorgeben von Parameterwerten für den magnetisch-induktiven Durchflussmesser. Durch dieses Zusammenwirken wird die Funktionsweise des Computerprogrammprodukts verwirklicht. Derartige Teilprogramme können beispielsweise auf einer Steuereinheit des magnetisch-induktiven Durchflussmessers, einem Leitrechner, und/oder einer Computer-Cloud ausgeführt werden. Darüber hinaus kann das Computerprogrammprodukt rein als Software ausgebildet sein oder festverdrahtet, beispielsweise als Chip, Integrierte Schaltung oder FPGA. Weiter alternativ kann das Computerprogrammprodukt auch als eine Kombination hieraus ausgebildet sein.

Genauso wird die zugrundeliegende Aufgabe durch eine erfindungsgemäße Steuereinheit gelöst. Die Steuereinheit umfasst eine Speichereinheit und eine Rechnereinheit, die im Betrieb zusammenwirken und das Ausführen von Computerprogrammprodukten erlauben. Die Steuereinheit ist dazu ausgebildet, einen magnetisch-induktiven Durchflussmesser anzusteuern und verfügt hierzu über geeignete Eingänge und Ausgänge für Daten bzw. Befehle. Erfindungsgemäß ist die Steuereinheit dazu ausgebildet, ein Computerprogramprodukt auszuführen, das gemäß einer der oben dargelegten Ausführungsformen ausgebildet ist. Alternativ kann die Steuereinheit dazu ausgebildet sein, zumindest eine Ausführungsform der beschriebenen Verfahren umzusetzen. Eine solche Steuereinheit ist mit einfacher Hardware realisierbar und dadurch besonders kosteneffizient. Die technischen Vorzüge der zugrundeliegenden Verfahren sind so in besonderem Umfang erzielbar.

Ebenso wird die Aufgabenstellung durch einen erfindungsgemä-βen magnetisch-induktiven Durchflussmesser gelöst. Der magnetisch-induktive Durchflussmesser ist dazu ausgebildet, einen Durchfluss eines Fluids in einem Querschnitt eines Rohrs zu messen und verfügt dazu über eine Magnetspule und einen Spannungssensor. Die Magnetspule und der Spannungssensor sind über eine Steuereinheit betätigbar bzw. auslesbar. Erfindungsgemäß ist die Steuereinheit nach einer der oben skizzierten Ausführungsformen ausgebildet.

Ferner wird die zugrundeliegende Aufgabenstellung durch ein erfindungsgemäßes Computerprogrammprodukt gelöst, das zu einem Simulieren eines Betriebsverhaltens eines magnetisch-induktiven Durchflussmessers geeignet ist, insbesondere dazu ausgebildet ist.

Insbesondere kann das Computerprogrammprodukt dazu eingerichtet sein, das Betriebsverhalten des magnetisch-induktiven Durchflussmesser zu simulieren, indem dessen Aufbau darin fest vorgegeben ist, also ein Abbild dessen hinterlegt ist. Alternativ kann das Betriebsverhalten auch durch ein abstrahiertes Rechenmodell dargestellt werden, das vom räumlichen Aufbau des magnetisch-induktiven Durchflussmessers unabhängig ist. Weiter alternativ kann das Betriebsverhalten auch anhand einer Kombination hieraus ermittelt werden. Der zu simulierende magnetisch-induktive Durchflussmesser ist erfindungsgemäß nach einer der oben beschriebenen Ausführungsformen ausgebildet. Das Computerprogrammprodukt verfügt zur Simulation über ein Physik-Modul, in dem der magnetisch-induktive Durchflussmesser abgebildet ist und beispielsweise sein elektrisches oder signaltechnisches Verhalten unter einstellbaren Betriebsbedingungen nachstellbar ist. Zu den einstellbaren Betriebsbedingungen gehört erfindungsgemäß ein Störungsspektrum mit unterschiedlichen Störfrequenzen. Beispielsweise können zu den einstellbaren Betriebsbedingungen ein Durchfluss im Querschnitt des Rohrs, eine Temperatur, ein Druck, eine Viskosität im Fluid im Rohr, dessen Leitfähigkeit, dessen Induktionsverhalten, magnetische Permissivität, eine Magnetisierbarkeit gehören. Hierzu kann das Computerprogrammprodukt über eine Datenschnittstelle verfügen, über die entsprechende Daten über eine Benutzereingabe und/oder andere simulationsgerichtete Computerprogrammprodukte vorgebbar sind. Das Computerprogrammprodukt kann auch über eine Datenschnittstelle zum Ausgeben von Simulationsresultaten an einen Benutzer und/oder andere simulationsgerichtete Computerprogrammprodukte verfügen. Mittels des Computerprogrammprodukts sind erfindungsgemäß Messsignale von Spannungssensoren des magnetisch-induktiven Durchflussmessers auf Plausibilität prüfbar. Ebenso sind auch andere Sensorwerte einer Anlage, in der der magnetisch-induktive Durchflussmesser eingesetzt wird, auf Plausibilität prüfbar. Dadurch kann unter anderem ein defekter Spannungssensor, identifiziert werden. Gleichermaßen ist auch ein Sensor mit Degradationserscheinungen identifizierbar. Die Erfindung beruht unter anderem auch auf der überraschenden Erkenntnis, dass die oben skizzierten Verfahren bei relativ geringem Rechenaufwand mit gesteigerter Präzision modellierbar sind. Dementsprechend wird durch das erfindungsgemäße Computerprogrammprodukt eine umfangreiche und gleichzeitig rechenkapazitätenschonende Möglichkeit zum Überwachen und/oder Erproben eines entsprechenden magnetisch-induktiven Durchflussmessers zur Verfügung gestellt. Das Computerprogrammprodukt kann als sogenannter Digitaler Zwilling ausgebildet sein, wie beispielsweise in der Druckschrift US 2017/286572 A1 näher beschrieben. Der Offenbarungsgehalt von US 2017/286572 A1 wird durch Verweisung in die vorliegende Anmeldung mit einbezogen. Das Computerprogrammprodukt kann monolithisch ausgebildet sein, also vollständig auf einer Hardwareplattform ausführbar. Alternativ kann das Computerprogrammprodukt modular ausgebildet sein und eine Mehrzahl an Teilprogrammen umfassen, die auf separaten Hardwareplattformen ausführbar sind und über eine kommunikative Datenverbindung zusammenwirken. Insbesondere kann das Computerprogrammprodukt in einer Computer-Cloud ausführbar ausgebildet sein. Ferner kann durch das erfindungsgemäße Computerprogrammprodukt ein magnetisch-induktiver Durchflussmesser per Simulation erprobt und/oder optimiert werden, beispielsweise bei einer geplanten Nachrüstung in einer Anlage.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch einen Aufbau einer Ausführungsform des beanspruchten magnetisch-induktiven Durchflussmessers;
- FIG 2: ein Stadium einer Ausführungsform ersten erfindungsgemäßen Verfahrens;
- FIG 3: ein anschließendes Stadium des Verfahrens aus FIG 2;
- FIG 4: ein weiteres Stadium des Verfahrens aus FIG 3;
- FIG 5: schematisch einen Ablauf eines zweiten erfindungsgemäßen Verfahrens.

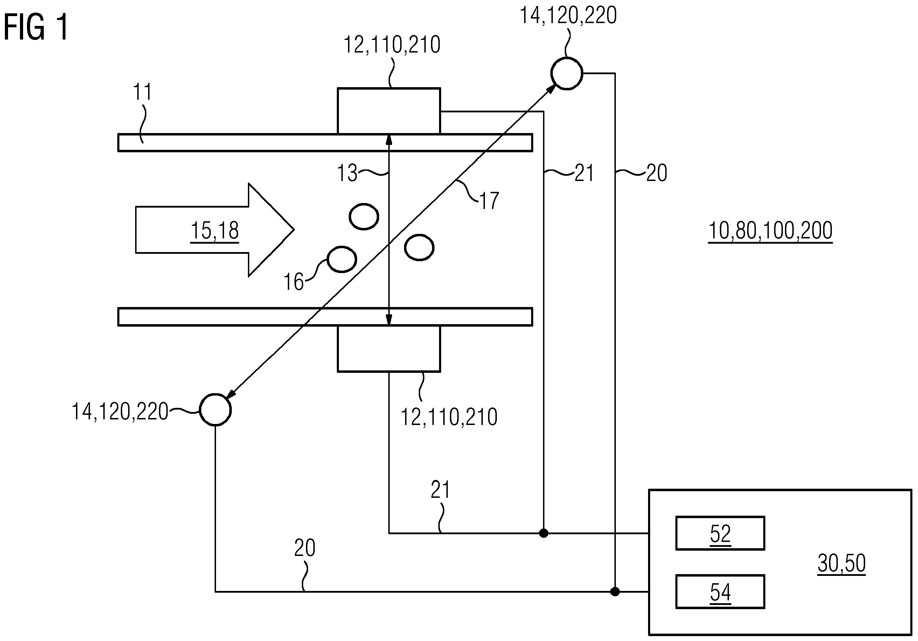

Ein schematischer Aufbau einer Ausführungsform eines erfindungsgemäßen magnetisch-induktiven Durchflussmessers 10 ist in FIG 1 gezeigt. Der magnetisch-induktive Durchflussmesser 10 ist auf einem Rohr 11 angebracht und dazu ausgebildet, einen Durchfluss 15 durch das Rohr 11 zu messen. Dazu verfügt der magnetisch-induktive Durchflussmesser 10 über Magnetspulen 12, die über eine Steuereinheit 30 anregbar sind. Hierzu ist die Steuereinheit 30 dazu ausgebildet, zur Anregung Anregungssignale in Form von Rechtecksignalen 21 an die Magnetspulen 12 zu senden. Durch die Magnetspulen 12 ist ein veränderliches Magnetfeld 13 mit einer Pulsfrequenz 19 hervorrufbar, mit dem elektrisch geladene Teilchen 16 im Fluid 18, dessen Durchfluss 15 gemessen wird, in Wechselwirkung treten. Die Wechselwirkung zwischen den elektrisch geladenen Teilchen 16 und dem Magnetfeld 13 besteht in einem Verursachen einer elektrischen Spannung 17 im Wesentlichen quer zum Magnetfeld 13, die über Spannungssensoren 14 erfassbar ist. Die erfassten elektrischen Spannungen 17 ist als Messsignale 20 an die Steuereinheit 30 weiterleitbar. Das Anregen der Magnetspulen 12 erfolgt mittels des Rechtecksignals 21, so dass das Magnetfeld 13 im Wesentlichen sofort eine vorgebbare magnetisch Flussdichte aufweist, diese für eine vorgebbare Pulsdauer hält und anschließend im Wesentlichen sofort wieder auf Null zurückgeht. Ein solches als Rechtecksignal ausgebildetes Rechtecksignal 21 wird auch als boxcar signal bezeichnet. Das Anregen der Magnetspule 12 erfolgt hierbei in einem ersten Schritt 110, 210 eines Verfahrens 100, 200, dazu zum Messen des Durchflusses 15 ausgebildet ist. Das Erfassen der elektrischen Spannung 17 mittels der Spannungssensoren 14 erfolgt in einem zweiten Schritt 120, 220. Die jeweiligen ersten Schritte 110, 210 sind in allen erfindungsgemäßen Verfahren 100, 200 gleich. Die Verfahren 100, 200, die mit der Steuereinheit 30 durchführbar sind, basieren auf derselben Betrachtung des Verhaltens der erfassten Messsignale 20, die die hervorgerufene Spannung 17 wiedergeben. Die Steuereinheit 30 verfügt über eine Speichereinheit 52 und eine Recheneinheit 54, durch die ein Computerprogrammprodukt 50 ausführbar ist, über das zumindest eines der Verfahren 100, 200 umsetzbar ist. Ferner ist der magnetisch-induktive Durchflussmesser 10 in einem Computerprogrammprodukt 80 abgebildet, das als sogenannter Digitaler Zwilling ausgebildet ist. Dieser ist zumindest dazu geeignet, vorzugsweise dazu ausgebildet, das Betriebsverhalten des magnetisch-induktiven Durchflussmessers 10 zu simulieren und umfasst hierzu ein bauliches Abbild des magnetisch-induktiven Durchflussmessers 10 und/oder ein mathematisches Modell, das dessen Funktionsweise widerspiegelt. Das Computerprogrammprodukt 80 zum Simulieren des Betriebsverhaltens erlaubt es, beispielsweise eine defekte Magnetspule 12 oder einen defekten Spannungssensor 14 zu identifizieren und/oder einen ermittelten Durchfluss 15 zu plausibilisieren.

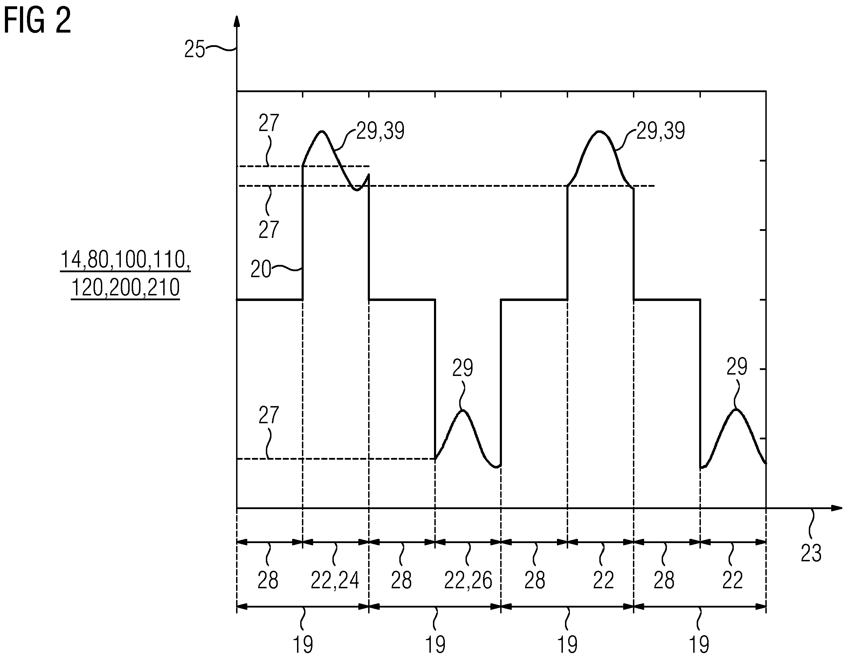

Eine Ausführungsform des ersten erfindungsgemäßen Verfahrens 100 ist in FIG 1 in einem Stadium schematisch abgebildet. FIG 1 zeigt ein Diagramm mit einer horizontalen Zeitachse 23 und einer vertikalen Spannungsachse 25 als Größenachse. Der Graph zeigt einen Verlauf eines Messsignals 20, das einer über Spannungssensoren 14 erfassten Spannung 17 entspricht, wie beispielsweise in FIG 1 illustriert. Das Messsignal 20 korrespondiert in seiner Grundform mit einem Rechtecksignal 21, mit dem Magnetspulen 12 wie in FIG 1 angeregt werden. Das Messsignal 20 umfasst Messwertabschnitte 22, die mit alternierenden Orientierungen aufeinander folgen. Zwischen den Messwertabschnitten 22 liegen Inaktivphasen 28, deren Dauern, also Erstreckung entlang der Zeitachse 23, einstellbar sind. Auch die jeweiligen Dauern der Messwertabschnitte 22, also deren Erstreckung entlang der Zeitachse 23, sind einstellbar. Die Dauern der Messwertabschnitte 22 und der Inaktivphasen 28 ergeben zusammen Periodendauern, die der Pulsfrequenz 19 entsprechen, mit der das veränderliche Magnetfeld 13 im Rohr 11 durch die Magnetspulen 12 hervorgerufen ist. Jeder Messwertabschnitt 22 weist einen Amplitudenwert 27 auf, der der Spannung 17 entspricht, die durch das Messsignal 20 wiedergegeben wird. Der Amplitudenwert 27, der der vorliegenden Spannung 17 entspricht, ist im Messsignal 20 mit einer Störung 29 beaufschlagt, die eine Störfrequenz 39 aufweist. Infolge der Störung 29 wird das Erkennen des korrekten Amplitudenwerts 27 erschwert. Das Diagramm nach FIG 2 gibt ein Stadium des ersten Verfahrens 100 wieder, in dem der erste und zweite Schritt 110, 120 bereits durchgeführt ist und eine weitergehende Auswertung des Messsignal 20 durchzuführen ist. Zur weitergehenden Auswertung des Messsignals 20 werden einzelne Messwertabschnitte 22, insbesondere ein erster und ein zweiter Messwertabschnitt 24, 26 näher betrachtet. Das in FIG 2 gezeigte Stadium des Verfahrens 100 wird in einem Computerprogrammprodukt 80, das als Digitaler Zwilling ausgebildet ist, simuliert.

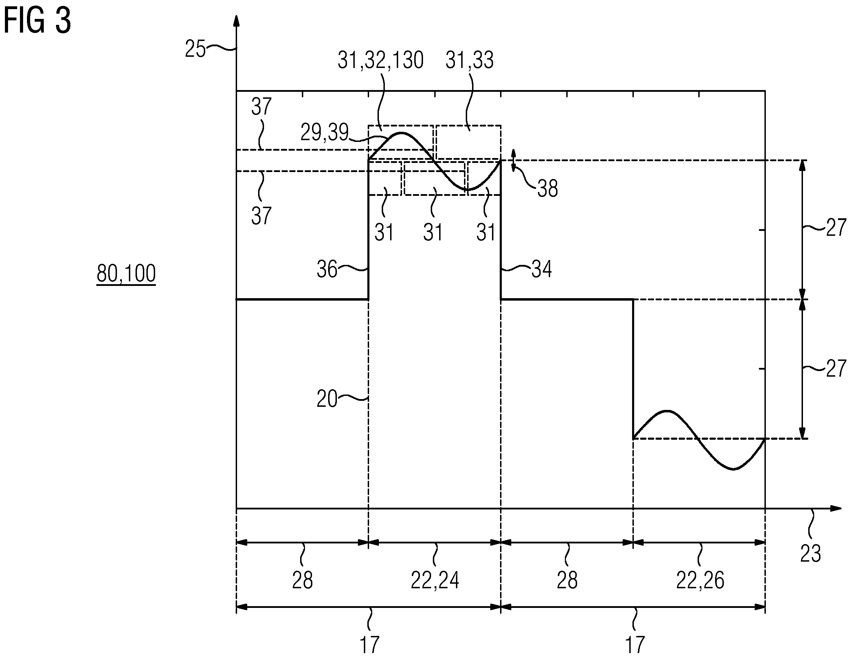

In FIG 3 ist ein Stadium des ersten erfindungsgemäßen Verfahrens 100 gezeigt, das sich an das in FIG 2 dargestellte Stadium anschließt. FIG 3 zeigt im Wesentlichen einen vergrößerten Ausschnitt des Diagramms aus FIG 2. Korrespondierend weist das Diagramm in FIG 3 auch eine Zeitachse 23 und eine Spannungsachse 25 auf, in dem der Verlauf des Messsignals 20 dargestellt ist. In einem dritten Schritt 130 wird ein erster Messwertabschnitt 24 identifiziert, der näher auszuwerten ist. Der erste Messwertabschnitt 24 ist beispielsweise anhand seiner im Wesentlichen vertikalen vorderen Flanke 34 bzw. hinteren Flanke 34 signaltechnisch einfach erkennbar. Im dritten Schritt 130 wird der erste Messwertabschnitt 24 in Teilabschnitte 31 aufgeteilt, die separat zu untersuchen sind. Für einen ersten Teilabschnitt 32 des ersten Messwertabschnitts 24 wird im dritten Schritt 130 ein Durchschnittswert 37 des Messsignals 20 ermittelt. Ebenso wird in dritten Schritt 130 ein Durchschnittswert 37 für einen zweiten Teilabschnitt 33 des ersten Messwertabschnitts 24 ermittelt. Die Durchschnittswerte 37 sind in FIG 3 durch unterbrochene Linien angedeutet. Der zweite Teilabschnitt 33 folgt hierbei unmittelbar auf den ersten Teilabschnitt 32. Aufgrund der im Wesentlichen sinusförmigen Störung 29 sind die Durchschnittswerte 37 des Messsignals 20, also dessen jeweiliger durchschnittlicher Amplitudenwert 27, im ersten und zweiten Teilschabschnitt 32, 33 ungleich. Durch einen Abgleich der Durchschnittswerte 37 im ersten und zweiten Teilabschnitt 32, 33, beispielsweise durch geeignete Differenzbildung, ist ermittelbar, dass die Störung 29 vorliegt. Das Vorhandensein der Störung 29 wird erkannt, wenn die Durchschnittswerte 37 im ersten und zweiten Teilabschnitt 32, 33 um mindestens einen Stör-Schwellenwert 38 voneinander abweichen. Der Stör-Schwellenwert 38 ist durch einen Benutzer oder einen Algorithmus, der als Komponente des Computerprogrammprodukts 50 in der Steuereinheit 30 ausgebildet sein kann, vorgegeben werden. Alternativ oder ergänzend sind als erster bzw. zweiter Teilabschnitt 32, 33 auch andere Teilabschnitte 31 auswählbar, die sich auch teilweise zeitlich überlappen können. Durch wiederholtes Durchführen des dritten Schritts 130 mit unterschiedlich gewählten Teilabschnitten 31 als erstem und zweitem Teilabschnitt 32, 33 des ersten Messwertabschnitts 24 ist die Form der Störung 29 näher bestimmbar. Weiter alternativ oder ergänzend ist der dritte Schritt 130 auch korrespondierend an einem zweiten Messwertabschnitt 26 durchführbar. Das Bilden des Durchschnittswerts 37 ist in einfacher Weise schnell durchführbar und stellt für das Verfahren 100 einen aussagekräftigen Parameter dar. Das in FIG 3 gezeigte Stadium des Verfahrens 100 wird in einem Computerprogrammprodukt 80, das als Digitaler Zwilling ausgebildet ist, simuliert.

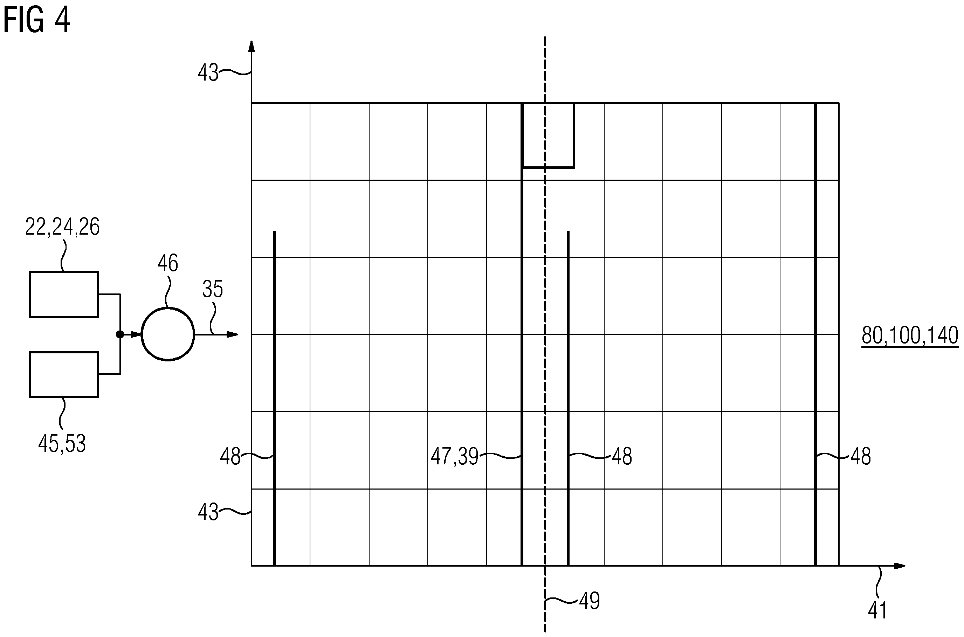

Ein weiteres Stadium des erfindungsgemäßen ersten Verfahrens 100 ist in FIG 4 abgebildet. Das Stadium in FIG 4 geht davon aus, dass zumindest der erste und zweite Schritt 110, 120 abgeschlossen sind und ein vierter Schritt 140 durchführbar ist. Für den vierten Schritt 140 wird ein Trägersignal 45 bereitgestellt. Das erfasste Messsignal 20, wie beispielsweise in FIG 2 gezeigt, wird zumindest im Umfang des ersten und zweiten Messwertabschnitts 24, 26 im Zuge einer Modulation 46 mit dem Trägersignal 45 kombiniert. Die Modulation 46 ist als Quadraturamplitudenmodulation ausgebildet. Das so erhaltene modulierte Trägersignal 35 wird weiter im Zuge des vierten Schritts 140 einer Frequenzanalyse 40 unterworfen, deren Resultat in FIG 4 als Diagramm gezeigt ist. Das Diagramm umfasst eine horizontale Frequenzachse 41 und eine vertikale Magnitudenachse 43. Ferner ist das Diagramm durch eine Linie geteilt, die die sogenannte Null-Frequenz darstellt, die als Vergleichsfrequenz 49 dient. Bei einem Messsignal 20, das frei von Störungen 29 ist oder bei dem die Störungen unterdrückt werden, ist in der Frequenzanalyse 40 bei der Vergleichsfrequenz 49 eine Spitze, auch peak genannt, zu erwarten. Im vierten Schritt 140, wie in FIG 4 gezeigt, wird eine Frequenzverschiebung 47 erkannt, die die Störung 29 quantifiziert. Der Betrag der Frequenzverschiebung 47, also dessen Abstand zur Vergleichsfrequenz 49, entspricht der Störfrequenz 39 wie beispielsweise in FIG 2 oder FIG 3 gezeigt. Weiter erfolgt ein Erkennen von Artefakten 48 in der Frequenzanalyse 40, so dass eine Verwechslung mit einer Störfrequenz 39, also einer Störung 29, vermieden wird. Die Artefakte 48 sind durch das Computerprogrammprodukt 50 in der Steuereinheit 30 basierend auf Angaben zur Trägerfrequenz 53 in Verbindung mit Angaben zur Pulsfrequenz 19 rechnerisch prognostizierbar. Dadurch ist in einfacher Weise eine Vermeidung von unzutreffend diagnostizierten Störungen 29 gewährleistet. Ausgehend von der im vierten Schritt 140 über die Störfrequenz 39 quantifizierten Störung 29 ist auf eine Ursache der Störung 29 schließbar. Ferner ist die Dauer der Inaktivphasen 28 und/oder Messwertabschnitte 22, wie in FIG 2 oder FIG 3 gezeigt, anpassbar, so dass die Störwirkung der Störung 29 für die Ermittlung des Durchflusses 15 minimiert wird. Das Verfahren 100, wie in FIG 4 abgebildet, erlaubt insgesamt eine zuverlässige und hinreichend exakte Quantifizierung der vorhandenen Störung 29, so dass zielgerichtet Gegenmaßnahmen einleitbar sind. Das Verfahren 100 ist so selbsttätig anpassbar und folglich robust gegen Störungen 29. Das in FIG 4 gezeigte Stadium des Verfahrens 100 wird in einem Computerprogrammprodukt 80, das als Digitaler Zwilling ausgebildet ist, simuliert

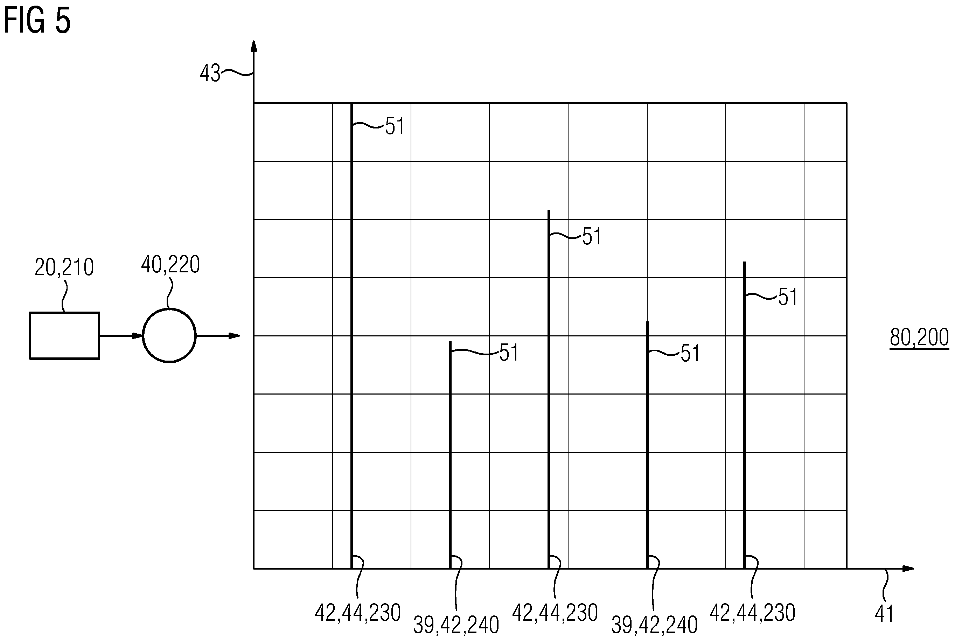

Eine Ausführungsform eines erfindungsgemäßen zweiten Verfahrens 200 zum Messen eines Durchflusses 15 in einem Rohr 11 ist in FIG 5 schematisch dargestellt. Das Verfahren 200 geht davon aus, dass ein erster Schritt 210, wie in FIG 2 gezeigt, bereits durchgeführt ist. Dementsprechend liegt aus dem ersten Schritt 210 ein Messsignal 20 vor, das in einem zweiten Schritt 220, zu dem eine Frequenzanalyse 40 durchgeführt wird. Die Frequenzanalyse 40 ist hierbei als Fourier-Analyse ausgebildet, durch die Frequenzanteile 42 des Messsignals 20 erfasst werden. Das Resultat der Frequenzanalyse 40 ist in FIG 5 in einem Diagramm dargestellt, das eine horizontale Frequenzachse 41 und eine vertikale Magnitudenachse 43 aufweist. Die Frequenzanalyse 40 zeigt eine Mehrzahl an Frequenzanteilen 42, deren jeweilige Frequenz in einem dritten Schritt 230 erfasst wird. Unter den Frequenzanteilen 42 werden Rechteck-Frequenzanteile 44 daran erkannt, dass diese in puncto Frequenz, also der Position der jeweiligen Spitze 51 auf der Frequenzachse 41, im Wesentlichen einem ungeradzahligen Vielfachen der Pulsfrequenz 19 entspricht, mit der, wie in FIG 2 skizziert, das veränderliche Magnetfeld 13 hervorgerufen wird. Das Verfahren 200 stützt sich darauf, dass ein Rechtecksignal 21 in einer Fourier-Analyse ausschließlich Frequenzanteile 42 aufweist, die ungeradzahligen Vielfachen der Pulsfrequenzen 19 entsprechen. Derartige Frequenzanteile 42 sind folglich im Verfahren 200 zuverlässig erkennbar. Weitere Frequenzanteile 42, die zwischen den Rechteck-Frequenzanteilen 44 liegen, werden in einem vierten Schritt 240 als Störfrequenzen 39 erkannt. Hier weisen geradzahlige Harmonische auf Nichtlinearitäten hin, die mit dem Pulssignal 19 verkoppelt sind. Beispielsweise können dies Sättigungseffekte in magnetischen Materialien oder elektrochemische Effekte sein. Signalanteile mit anderen Frequenzen können auf extern Störungen oder Defekte in der Elektronik des Gerätes hinweisen. Anhand des Resultats des dritten und vierten Schritts 230, 240 ist in einfacher Weise identifizierbar, welche Frequenzanteile 42 des Messsignals 20 zu einem Ermitteln des Durchflusses 15 im Rohr 11, wie in FIG 1 dargestellt, heranzuziehen sind. Beispielsweise sind die im Verfahren 200 erkannten Störfrequenzen 39 mittels geeigneter Filter entfernbar. Alternativ oder ergänzend ist aus den als Rechteck-Frequenzanteilen 44 ein Amplitudenwert 27, wie beispielsweise in FIG 2 skizziert, ermittelbar. Frequenzanalysen 40, insbesondere Fourier-Analysen, sind in einer Vielzahl an Steuereinheiten 30 für magnetisch-induktive Durchflussmesser 10 schnell und präzise durchführbar. Die steigende verfügbare Rechenleistung von Steuereinheiten 30 wird so genutzt und magnetisch-induktive Durchflussmesser 10 in anspruchsvollen Umgebungen einzusetzen. Das Verfahren 200 ist so gerätegebunden, also dezentral, ausführbar. Übergeordnete Steuersysteme von Automatisierungsanlagen werden bei der Durchflussmessung so in puncto Rechenaufwand entlastet. Dies erlaubt es, eine Vielzahl an magnetisch-induktiven Durchflussmessern 10 in einer Automatisierungsanlage einzusetzen, ohne Gefahr zu laufen, dass diese mit unzutreffenden Werten für den jeweils zu messenden Durchfluss 15 in der übergeordneten Steuerung einen ausufernden Prüf- und Korrekturaufwand erzeugen. Folglich ermöglicht das Verfahren 200 magnetisch-induktive Durchflussmesser 10, mit denen in praktikabler Weise auch komplexe Automatisierungsanlagen betreibbar sind. Das Verfahren 200, wie in FIG 5 skizziert, ist ferner in einem Computerprogrammprodukt 80, das als Digitaler Zwilling ausgebildet ist, simulierbar.

## Patentansprüche

1. Verfahren (100) zum Messen eines Durchflusses (15) in einem Rohr (11) mittels eines magnetisch-induktiven Durchflussmessers (10), der am Rohr (11) befestigt ist, umfassend die Schritte:
a) Anregen einer Magnetspule (12) des magnetisch-induktiven Durchflussmessers (10) mit einem Rechtecksignal (21) bei einer Pulsfrequenz (19) und Erfassen eines Messsignals (20) ;
b) Erfassen eines ersten Messwertabschnitts (24) des Messsignals (20), der einen ersten und einen zweiten Teilabschnitt (32, 33) umfasst;
c) Ermitteln jeweils eines Durchschnittswerts (37) des Messsignals (20) im ersten und zweiten Teilabschnitt (32, 33);
wobei eine Störung (29) des Messsignals (20) erkannt wird, wenn die Durchschnittswerte (37) um mindestens einen einstellbaren Stör-Schwellenwert (38) voneinander abweichen **dadurch gekennzeichnet, dass** das Rechtecksignal (21) eine unabhängig vom ersten und/oder zweiten Messwertabschnitt (24, 26) einstellbare Inaktivphase (28) aufweist, und in einem weiteren Schritt eine Pulsdauer des Rechtecksignals (21) und/oder eine Dauer der Inaktivphase (28) zu einem Angleichen einer Störwirkung in aufeinanderfolgenden Messwertabschnitten (22, 24, 26) angepasst wird.

2. Verfahren (100) nach Anspruch 1, **dadurch gekennzeichnet, dass** der erste und zweite Teilabschnitt (32, 33) zeitlich aufeinander folgen oder sich teilweise zeitlich überlappen.

3. Verfahren (100) nach Anspruch 1 oder 2, **dadurch gekennzeichnet, dass** für den ersten Messwertabschnitt (24) und einen zweiten Messwertabschnitt (26) jeweils ein Durchschnittswert (37) des Messsignals (20) ermittelt wird, auf deren Basis eine Amplitude (27) des Messsignals (20) ermittelt wird.

4. Verfahren (100) nach einem der Ansprüche 1 bis 3, **dadurch gekennzeichnet, dass** zumindest die Schritte a) und b) auch für den zweiten Messwertabschnitt (26) durchgeführt werden, wobei die Messsignale (20) des ersten und zweiten Messwertabschnitts (24, 26) auf ein Trägersignal (45) moduliert werden, dessen Trägerfrequenz (53) der Pulsfrequenz (19) entspricht, und hieraus eine Frequenzverschiebung (47) gegenüber einer Vergleichsfrequenz (49) ermittelt wird.

5. Verfahren (100) nach Anspruch 4, **dadurch gekennzeichnet, dass** das Modulieren auf das Trägersignal (45) mittels einer Quadraturamplitudenmodulation erfolgt und/oder die Vergleichsfrequenz (49) eine Netz-Sollfrequenz ist.

6. Verfahren (200) zum Messen eines Durchflusses (15) in einem Rohr (11) mittels eines magnetisch-induktiven Durchflussmessers (10), der am Rohr (11) befestigt ist, umfassend die Schritte:
a) Anregen einer Magnetspule (12) des magnetisch-induktiven Durchflussmessers (10) mit einem Rechtecksignal (21) bei einer Pulsfrequenz (19) und Erfassen eines Messsignals (20) ;
b) Durchführen einer Frequenzanalyse (40) des Messsignals (20) zum Ermitteln von Frequenzanteilen (42) des Messsignals (20);
c) Erkennen eines Frequenzanteils (42) des Messsignals (20) als Rechteck-Frequenzanteil (44), wenn der Frequenzanteil (42) einem ungeradzahligen Bruchteil der Pulsfrequenz (19) entspricht; und andernfalls
d) Erkennen eines Frequenzanteils des Messsignals (20) als Störfrequenz (39);
wobei in einem weiteren Schritt die Dauern von Messwertabschnitten (22) auf ein ganzzahliges Vielfaches einer Periodendauer der Störfrequenz (39) geändert wird, wobei Dauern von Inaktivphasen (28) angepasst werden.

7. Verfahren (200) nach Anspruch 6, **dadurch gekennzeichnet, dass** die Frequenzanalyse (40) als Fourier-Analyse oder als Wavelet-Analyse ausgebildet ist.

8. Verfahren (200) nach Anspruch 6 oder 7, **dadurch gekennzeichnet, dass** ein weiterer Schritt e) durchgeführt wird, in dem eine Amplitude (27) des Messsignals (20) anhand der Frequenzanalyse (40) ermittelt wird.

9. Steuereinheit (30) eines magnetisch-induktiven Durchflussmessers (10), umfassend eine Speichereinheit (52) und einer Recheneinheit (54) zum Durchführen eines Computerprogrammprodukts (50), **dadurch gekennzeichnet, dass** die Steuereinheit (30) dazu ausgebildet ist, zumindest eines der Verfahren (100) nach einem der Ansprüche 1 bis 8 umzusetzen.

10. Magnetisch-induktiver Durchflussmesser (10) zu einem Messen eines Durchflusses (15) durch ein Rohr (11), umfassend eine Magnetspule (12) und einen Spannungssensor (14), die mit einer Steuereinheit (30) verbunden sind, **dadurch gekennzeichnet, dass** die Steuereinheit (30) nach Anspruch 9 ausgebildet ist.

11. Computerprogrammprodukt (80) zum Simulieren eines Betriebsverhaltens eines magnetisch-induktiven Durchflussmessers (10), **dadurch gekennzeichnet, dass** der Durchflussmesser (10) nach Anspruch 10 ausgebildet ist und das Computerprogrammprodukt (80) als Digitaler Zwilling ausgebildet ist, wobei das Computerprogrammprodukt (80) über ein Physik-Modul verfügt, in dem der magnetisch-induktive Durchflussmesser (10) abgebildet ist und dessen elektrisches oder signaltechnisches Verhalten unter vorgebbaren Betriebsbedingungen nachstellbar ist, wobei die vorgebbaren Betriebsbedingungen ein Störungsspektrum mit unterschiedlichen Störfrequenzen gehört, und das Computerprogrammprodukt (80) zu einem Prüfen von Messsignalen von Spannungssensoren des magnetisch-induktiven Durchflussmessers (10) auf Plausibilität ausgebildet ist, um einen defekten Spannungssensor zu identifizieren.

## Claims

1. Method (100) for measuring a flow rate (15) in a pipe (11) by means of a magneto-inductive flowmeter (10) that is fastened to the pipe (11), comprising the steps:
a) exciting a magnet coil (12) of the magneto-inductive flowmeter (10) with a square-wave signal (21) at a pulse frequency (19) and capturing a measurement signal (20);
b) capturing a first measurement value portion (24) of the measurement signal (20), said measurement value portion comprising a first and a second sub-portion (32, 33);
c) establishing a mean value (37) of the measurement signal (20) in each of the first and second sub-portions (32, 33);
wherein an interference (29) of the measurement signal (20) is recognised if the mean values (37) differ from one another by at least an adjustable interference threshold value (38), **characterised in that** the square-wave signal (21) has an inactive phase (28) which is adjustable independently of the first and/or second measurement value portion (24, 26), and in a further step, a pulse duration of the square-wave signal (21) and/or a duration of the inactive phase (28) is adapted for a balancing of an interference effect in successive measurement value portions (22, 24, 26).

2. Method (100) according to claim 1, **characterised in that** the first and second sub-portion (32, 33) follow one another temporally or partially overlap temporally.

3. Method (100) according to claim 1 or 2, **characterised in that** for each of the first measurement value portion (24) and a second measurement value portion (26), a mean value (37) of the measurement signal (20) is established, on the basis of which an amplitude (27) of the measurement signal (20) is established.

4. Method (100) according to one of claims 1 to 3, **characterised in that** at least the steps a) and b) are also carried out for the second measurement value portion (26), wherein the measurement signals (20) of the first and second measurement value portions (24, 26) are modulated onto a carrier signal (45), the carrier frequency (53) of which corresponds to the pulse frequency (19), and from this a frequency shift (47) relative to a comparison frequency (49) is established.

5. Method (100) according to claim 4, **characterised in that** the modulation onto the carrier signal (45) takes place by means of a quadrature amplitude modulation and/or the comparison frequency (49) is a mains target frequency.

6. Method (200) for measuring a flow rate (15) in a pipe (11) by means of a magneto-inductive flowmeter (10) that is fastened to the pipe (11), comprising the steps:
a) exciting a magnet coil (12) of the magneto-inductive flowmeter (10) with a square-wave signal (21) at a pulse frequency (19) and capturing a measurement signal (20);
b) carrying out a frequency analysis (40) of the measurement signal (20) for establishing frequency components (42) of the measurement signal (20);
c) recognising a frequency component (42) of the measurement signal (20) as a square-wave frequency component (44) if the frequency component (42) corresponds to an odd-numbered fraction of the pulse frequency (19); and otherwise
d) recognising a frequency component of the measurement signal (20) as an interference frequency (39);
wherein in a further step, the durations of measurement value portions (22) are amended to an integer multiple of a period duration of the interference frequency (39), wherein durations of inactive phases (28) are adapted.

7. Method (200) according to claim 6, **characterised in that** the frequency analysis (40) is designed as a Fourier analysis or a wavelet analysis.

8. Method (200) according to claim 6 or 7, **characterised in that** a further step e) is carried out in which an amplitude (27) of the measurement signal (20) is established on the basis of the frequency analysis (40).

9. Control unit (30) of a magneto-inductive flowmeter (10), comprising a storage unit (52) and a computer unit (54) for executing a computer program product (50), **characterised in that** the control unit (30) is designed to implement at least one of the methods (100) as claimed in one of claims 1 to 8.

10. Magneto-inductive flowmeter (10) for measuring a flow rate (15) through a pipe (11), comprising a magnet coil (12) and a voltage sensor (14) which are connected to a control unit (30), **characterised in that** the control unit (30) is designed as claimed in claim 9.

11. Computer program product (80) for simulating an operating behaviour of a magneto-inductive flowmeter (10), **characterized in that** the flowmeter (10) is designed as claimed in claim 10 and the computer program product (80) is designed as a digital twin, wherein the computer program product (80) has a physics module, in which the magneto-inductive flowmeter (10) is mapped and the electrical or signalling behaviour thereof can be emulated under adjustable operating conditions, wherein the adjustable operating conditions include an interference spectrum with different interference frequencies, and the computer program product (80) is designed for testing measurement signals of voltage sensors of the magneto-inductive flowmeter (10) for plausibility, in order to identify a defective voltage sensor.

## Revendications

1. Procédé (100) de mesure du débit (15) dans un tuyau (11) au moyen d'un débitmètre (10) magnéto-inductif, qui est fixé au tuyau (11), comprenant les stades :
a) excitation d'une bobine (12) d'électro-aimant du débitmètre (10) magnéto-inductif par un signal (21) rectangulaire à une fréquence (19) d'impulsion et détection d'un signal (20) de mesure ;
b) détection d'une première section (24) de valeur de mesure du signal (20) de mesure, qui comprend une première et une deuxième sections (32, 33) partielles ;
c) détermination respectivement d'une valeur (37) moyenne du signal (20) de mesure dans la première et la deuxième sections (32, 33) partielles ;
dans lequel on reconnaît une perturbation (29) du signal (20) de mesure si les valeurs (37) moyennes s'écartent l'une de l'autre d'au moins une valeur (38) de seuil de perturbation réglable, **caractérisé en ce que** le signal (21) rectangulaire a une phase (28) inactive réglable indépendamment de la première et/ou de la deuxième sections (24, 26) de valeur de mesure et, dans un autre stade, on adapte une durée d'impulsion du signal (21) rectangulaire et/ou une durée de la phase (28) inactive à une compensation d'un effet perturbateur dans des sections (22, 24, 26) de valeur de mesure successives.

2. Procédé (100) suivant la revendication 1, **caractérisé en ce que** la première et la deuxième sections (32, 33) partielles se suivent dans le temps ou se chevauchent en partie dans le temps.

3. Procédé (100) suivant la revendication 1 ou 2, **caractérisé en ce que** pour la première section (24) de valeur de mesure et une deuxième section (26) de valeur de mesure, on détermine respectivement une valeur (37) moyenne du signal (20) de mesure, sur la base desquelles on détermine une amplitude (27) du signal (20) de mesure.

4. Procédé (100) suivant l'une des revendications 1 à 3, **caractérisé en ce que** l'on effectue au moins les stades a) et b) également pour la deuxième section (26) de valeur de mesure, dans lequel on module les signaux (20) de mesure de la première et de la deuxième sections (24, 26) de mesure sur un signal (45) de porteuse, dont la fréquence (53) de porteuse correspond à la fréquence (19) d'impulsion et on en détermine un décalage (47) de fréquence par rapport à une fréquence (49) de compensation.

5. Procédé (100) suivant la revendication 4, **caractérisé en ce que** la modulation s'effectue sur le signal (45) de porteuse au moyen d'une modulation d'amplitude en quadrature et/ou la fréquence (49) de compensation est une fréquence de consigne de réseau.

6. Procédé (200) de mesure du débit (15) dans un tuyau (11) au moyen d'un débitmètre (10) magnéto-inductif, qui est fixé au tuyau (11), comprenant les stades :
a) excitation d'une bobine (12) d'électro-aimant du débitmètre (10) magnéto-inductif par un signal (21) rectangulaire à une fréquence (19) d'impulsion et détection d'un signal (20) de mesure ;
b) on effectue une analyse (40) de fréquence du signal (20) de mesure pour la détermination de composantes (42) de fréquence du signal (20) de mesure ;
c) on détecte une composante (42) de fréquence du signal (20) de mesure comme composante (44) de fréquence rectangulaire si la composante (42) de fréquence correspond à une fraction en nombre impair de la fréquence (19) d'impulsion ; et sinon
d) on détecte une composante de fréquence du signal (20) de mesure comme fréquence (39) perturbatrice ;
dans lequel, dans un autre stade, on modifie la durée des sections (22) de valeur de mesure à un multiple en nombre entier d'une période de la fréquence (39) perturbatrice, dans lequel on adapte des durées par des phases (28) inactives.

7. Procédé (200) suivant la revendication 6, **caractérisé en ce que** l'analyse (40) de fréquence est constituée sous la forme d'une analyse de Fourier ou d'une analyse d'ondelette.

8. Procédé (200) suivant la revendication 6 ou 7, **caractérisé en ce que** l'on effectue un autre stade e), dans lequel on détermine une amplitude (27) du signal (20) de mesure à l'aide de l'analyse (40) de fréquence.

9. Unité (30) de commande d'un débitmètre (10) magnéto-inductif, comprenant une unité (52) de mémoire et une unité (54) informatique pour effectuer un produit (50) de programme d'ordinateur, **caractérisée en ce que** l'unité (30) de commande est constituée pour exécuter au moins l'un des procédés (100) suivant l'une des revendications 1 à 8.

10. Débitmètre (10) magnéto-inductif pour une mesure d'un débit (15) dans un tuyau (11), comprenant une bobine (12) d'électro-aimant et un capteur (14) de tension, qui sont reliés à une unité (30) de commande, **caractérisé en ce que** l'unité (30) de commande est constituée suivant la revendication 9.

11. Produit (80) de programme d'ordinateur pour la simulation d'un comportement de fonctionnement d'un débitmètre (10) magnéto-inductif, **caractérisé en ce que** le débitmètre (10) est constitué suivant la revendication 10 et le produit (80) de programme d'ordinateur est constitué sous la forme d'un double numérique, dans lequel le produit (80) de programme d'ordinateur dispose d'un module physique, dans lequel le débitmètre (10) magnéto-inductif est représenté et dont le comportement électrique ou en technique du signal peut être réglé dans des conditions de fonctionnement pouvant être données à l'avance, dans lequel les conditions de fonctionnement pouvant être données à l'avance appartiennent à un spectre de perturbation ayant des fréquences perturbatrices différentes et le produit (80) de programme d'ordinateur est constitué pour contrôler la vraisemblance de signaux de mesure de capteur de tension du débitmètre (10) magnéto-inductif afin d'identifier un capteur de tension défectueux.
